# EUROPEAN PATENT APPLICATION

(11) **EP 1 850 169 A1**
(43) Date of publication of application: **31.10.2007**
(21) Application number: 07008014.8
(22) Date of filing: 19.04.2007
(51) Int. Cl.: G02F 1/1335

(54) **Liquid crystal panel**

(30) Priority: 28.04.2006 JP 2006124985; 09.01.2007 JP 2007001497
(71) Applicant: NITTO DENKO CORPORATION, Ibaraki Osaka 567-8680 (JP)
(72) Inventor: Takeda, Kentarou, Ibaraki Osaka 567-8680 (JP); Uwada, Kazuki, Ibaraki Osaka 567-8680 (JP)
(74) Representative: Koepe, Gerd L.

(57) **Abstract**

In a liquid crystal display uneven brightness may occur in the corners of the display under certain circumstances (for example, after exposure to 95% RH at 60°C during 250 hours), unless a waterproof agent is applied (eg. sprayed) on the side surfaces of polarizing plates (20,20') of a liquid crystal panel (100). When the waterproof agent is fluorine based, the water contact angle can be ≥ 80°.
When a cell (12) of the panel (100) is driven in a Vertical Alignment (VA) mode (Fig.3) the inclination of liquid crystal molecules is advantageous for displaying gradients. An Optically Compensated Bend (OCB) mode (Fig.4) allows, however, for high speed switching which is advantageous for displaying movies.

## Description

This application claims priority under 35 U.S.C. Section 119 to Japanese Patent Application No. 2006-124985 filed on April 28, 2006 and Japanese Patent Application No. 2007-1497 filed on January 9, 2007, which are herein incorporated by references.

### BACKGROUND OF THE INVENTION

### 1. Field of the Invention

The present invention relates to a liquid crystal panel and to a liquid crystal display apparatus. In particular, the present invention relates to a liquid crystal panel which is suitable for a liquid crystal display apparatus capable of providing a display without uneven brightness, and to a liquid crystal display apparatus using the liquid crystal panel.

### 2. Description of the Related Art

A polarizing plate is widely employed as an optical element which is indispensable for a liquid crystal panel and a liquid crystal display apparatus using the liquid crystal panel. A polarizing plate of high value such as a polarizing plate having an optical compensation function added is proposed in large numbers.

The polarizing plate typically employs a polarizing plate obtained by arranging a protective layer of triacetyl cellulose or the like on each side of a polarizer formed of a polyvinyl alcohol-based film containing iodine or a dichromatic dye aligned through adsorption.

The liquid crystal display apparatus has a problem in that light of backlight leaks in a peripheral region of a display screen to reduce contrast, that is, uneven brightness is caused. Thus, several methods of solving uneven brightness in the liquid crystal display apparatus are proposed (see JP 2005-70094 A, JP 2003-185845 A). However, with rapid enhancement of the liquid crystal display apparatus in recent years, dissolution of uneven brightness at higher level is desired.

### SUMMARY OF THE INVENTION

The present invention has been made in view of solving the conventional problems described above, and an object of the present invention is therefore to provide a liquid crystal panel which is suitable for a liquid crystal display apparatus capable of providing a display without uneven brightness, and a liquid crystal display apparatus using the liquid crystal panel.

A liquid crystal panel according to the present invention includes: a liquid crystal cell; a first polarizing plate arranged on one side of the liquid crystal cell; and a second polarizing plate arranged on another side of the liquid crystal cell, in which:
the first polarizing plate includes a first polarizer;
the second polarizing plate includes a second polarizer; and
the first polarizing plate includes a first waterproof part on at least a part of a side surface, and/or the second polarizing plate includes a second waterproof part on at least a part of a side surface.

According to a preferred embodiment of the present invention, the first polarizing plate has a substantially rectangular shape, and the first waterproof part includes four corners of the first polarizing plate.

According to another preferred embodiment of the present invention, the first waterproof part is provided on an entire side surface of the first polarizing plate.

According to still another preferred embodiment of the present invention, the second polarizing plate has a substantially rectangular shape, and the second waterproof part includes four corners of the second polarizing plate.

According to yet another preferred embodiment of the present invention, the second waterproof part is provided on an entire side surface of the second polarizing plate.

According to still yet another preferred embodiment of the present invention, the first waterproof part and the second waterproof part each have a water contact angle of 80° or more.

According to still yet another preferred embodiment of the present invention, the liquid crystal cell is of VA mode or OCB mode.

Another aspect of the present invention provides a liquid crystal display apparatus. The liquid crystal display apparatus of the present invention includes the liquid crystal panel of the present invention.

The present invention can provide a liquid crystal panel which is suitable for a liquid crystal display apparatus capable of providing a display without uneven brightness, and a liquid crystal display apparatus using the liquid crystal panel. Such effects can be realized by providing a waterproof part on at least a part of a side surface of each of the polarizing plates arranged on both sides of the liquid crystal cell.

### BRIEF DESCRIPTION OF THE DRAWINGS

In the accompanying drawings:
Figs. **1(a)** and **1(b)** are schematic sectional views of a liquid crystal panel according to a preferred embodiment of the present invention;
Figs. **2(a)** and **2(b)** are schematic sectional views of a liquid crystal panel according to another preferred embodiment of the present invention;
Figs. **3(a)** and **3(b)** are schematic sectional views explaining an alignment state of liquid crystal molecules in a liquid crystal layer in the case where a liquid crystal display apparatus of the present invention employs a liquid crystal cell of VA mode;
Figs. **4(a)** to **4(d)** are schematic sectional views explaining an alignment state of liquid crystal molecules in a liquid crystal layer in the case where a liquid crystal display apparatus of the present invention employs a liquid crystal cell of OCB mode;
Fig. **5** is a photograph showing a state of a liquid crystal panel during brightness measurement in Example 1;
Fig. **6** is a photograph showing a state of a liquid crystal panel during brightness measurement in Comparative Example 1;
Fig. **7** is a photograph showing a state of a liquid crystal panel during brightness measurement in Example 2;
Fig. **8** is a photograph showing a state of a liquid crystal panel during brightness measurement in Comparative Example 2;
Fig. **9** is a photograph showing a state of a liquid crystal panel during brightness measurement in Example 3;
Fig. **10** is a photograph showing a state of a liquid crystal panel during brightness measurement in Comparative Example 3;
Fig. **11** is a photograph showing a state of a liquid crystal panel during brightness measurement in Example 4; and
Fig. **12** is a photograph showing a state of a liquid crystal panel during brightness measurement in Comparative Example 4.

### DESCRIPTION OF THE PREFERRED EMBODIMENTS

Hereinafter, preferred embodiments of the present invention will be described, but the present invention is not limited to those embodiments.

### (Definitions of terms and symbols)

Definitions of terms and symbols in the specification of the present invention are described below.
(1) The symbol "nx" refers to a refractive index in a direction providing a maximum in-plane refractive index (that is, a slow axis direction), and the symbol "ny" refers to a refractive index in a direction perpendicular to the slow axis in the same plane (that is, a fast axis direction). The symbol "nz" refers to a refractive index in a thickness direction. Further, the expression "nx = ny", for example, not only refers to the case where nx and ny are exactly equal but also includes the case where nx and ny are substantially equal. In the specification of the present invention, the phrase "substantially equal" includes the case where nx and ny differ within a range providing no effects on overall polarization properties of an optical compensation layer (may be referred to as an optical film) in practical use.
(2) The term "in-plane retardation Δnd(550)" refers to an in-plane retardation value of a layer (film) measured at 23°C by using light of a wavelength of 550 nm. Δnd (550) can be determined from an equation Δnd = (nx-ny)xd, where nx and ny represent refractive indices of a layer (film) at a wavelength of 550 nm in a slow axis direction and a fast axis direction, respectively, and d (nm) represents a thickness of the layer (film). The term "in-plane retardation Δnd(380)" refers to an in-plane retardation value of a layer (film) measured at 23°C by using light of a wavelength of 380 nm. The term "in-plane retardation Δnd(780)" refers to an in-plane retardation value of a layer (film) measured at 23°C by using light of a wavelength of 780 nm.
(3) The term "thickness direction retardation Rth (550) " refers to a thickness direction retardation value measured at 23°C by using light of a wavelength of 550 nm. Rth(550) can be determined from an equation Rth = (nx-nz) xd, where nx and nz represent refractive indices of a layer (film) at a wavelength of 550 nm in a slow axis direction and a thickness direction, respectively, and d (nm) represents a thickness of the layer (film). The term " thickness direction retardation Rth(380)" refers to a thickness direction retardation value measured at 23°C by using light of a wavelength of 380 nm. The term "thickness direction retardation Rth(780)" refers to a thickness direction retardation value measured at 23°C by using light of a wavelength of 780 nm.

### A. Overall structure of liquid crystal panel

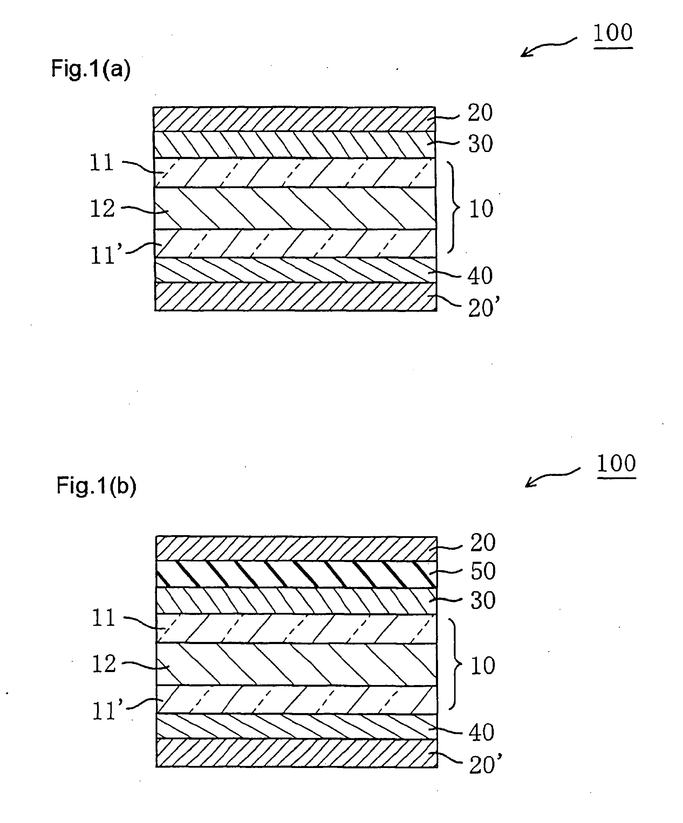

Fig. **1(a)** is a schematic sectional view of a liquid crystal panel according to an embodiment of the present invention. A liquid crystal panel **100** is provided with: a liquid crystal cell **10;** a first polarizer **20** arranged on one side (on a viewer side in the figure) of the liquid crystal cell **10;** a second polarizer **20'** arranged on another side (on a backlight side in the figure) of the liquid crystal cell **10**; and at least two optical compensation layers arranged between the first polarizer **20** and the second polarizer **20'.** At least two compensation layers include a first optical compensation layer **30** and a second optical compensation layer **40.** In the figure, the first optical compensation layer **30** is arranged between the first polarizer **20** and the liquid crystal cell **10,** and the second optical compensation layer **40** is arranged between the second polarizer **20'** and the liquid crystal cell **10.** According to this embodiment, the first compensation layer **30** may serve as a protective layer on a liquid crystal cell side of the first polarizer **20,** and the second optical compensation layer **40** may serve as a protective layer on a liquid crystal side of the second polarizer **20'.** Thus, this embodiment may contribute to reduction in thickness of a liquid crystal panel (eventually, a liquid crystal display apparatus).

Fig. **1(b)** is a schematic sectional view of a liquid crystal panel according to another embodiment of the present invention. In this embodiment, a protective layer **50** is provided between the first polarizer **20** and the first optical compensation layer **30.** The protective layer **50** is arranged adjacent to the liquid crystal cell side of the first polarizer **20,** and the first optical compensation layer **30** is arranged adjacent to the liquid crystal cell side of the protective layer **50.** According to this embodiment, the protective layer **50** is provided, to thereby significantly prevent degradation of the polarizer and provide a liquid crystal panel having excellent durability. Note that the first optical compensation layer **30** may be arranged on the backlight side and the second optical compensation layer **40** may be arranged on the viewer side, but the first optical compensation layer **30** is preferably arranged on the viewer side as shown in the figure. This is because effects of heat of backlight can be reduced, to thereby exert effects of the present invention. Further, any appropriate protective layer may be provided between the second polarizer **20'** and the second optical compensation layer **40.**

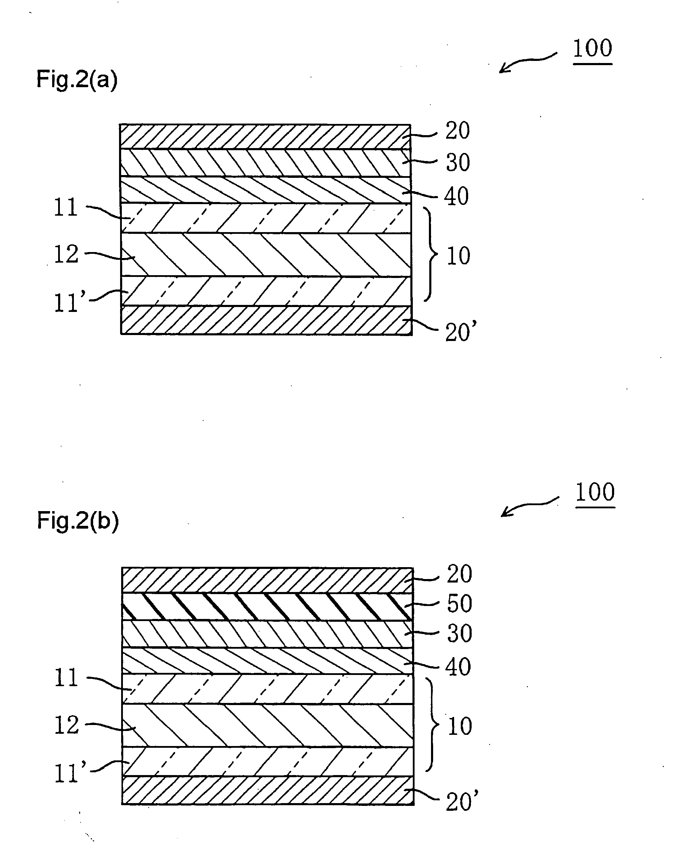

Fig. **2(a)** is a schematic sectional view of a liquid crystal panel according to still another embodiment of the present invention. In this embodiment, the first optical compensation layer **30** and the second optical compensation layer **40** are arranged between the first polarizer **20** and the liquid crystal cell **10.** According to this embodiment, the first optical compensation layer **30** may serve as a protective layer on the liquid crystal cell side of the first polarizer **20.** Thus, this embodiment may contribute to reduction in thickness of a liquid crystal panel (eventually, a liquid crystal display apparatus).

Fig. **2(b)** is a schematic sectional view of a liquid crystal panel according to yet another embodiment of the present invention. In this embodiment, the protective layer **50** is provided between the first polarizer **20** and the first optical compensation layer **30.** The protective layer **50** is arranged adjacent to the liquid crystal cell side of the first polarizer **20,** and the first optical compensation layer **30** is arranged adjacent to the liquid crystal cell side of the protective layer **50.** According to this embodiment, the protective layer **50** is provided, to thereby significantly prevent degradation of the polarizer and provide a liquid crystal panel having excellent durability. Note that positions of the first optical compensation layer **30** and the second optical compensation layer **40** may be reversed.

As shown in Figs. **1(a)** and **1(b),** the first optical compensation layer **30** and the second optical compensation layer **40** are preferably arranged on different sides of the liquid crystal cell **10.** This is because a product can be designed without considering a method of laminating the first optical compensation layer **30** and the second optical compensation layer **40,** and this arrangement provides excellent productivity.

In the present invention, any appropriate protective layer (may be referred to as a protective film, not shown) may be provided between the first polarizer **20** or the second polarizer **20',** and the second optical compensation layer **40** as required. Further, any appropriate protective layer may be provided on a side without an optical compensation layer of the first polarizer **20** and/or the second polarizer **20'** as required. The protective layer is provided, to thereby prevent degradation of the polarizers. In the present invention, another optical compensation layer (not shown) may be provided. The kind, number, position, and the like of such an optical compensation layer may appropriately be selected in accordance with the purpose. In the liquid crystal panel of the present invention, the respective layers (films) are laminated through any appropriate pressure-sensitive adhesive layer or adhesive layer.

The liquid crystal cell **10** includes: a pair of substrates **11** and **11' ;** and a liquid crystal layer **12** as a display medium arranged between the substrates **11** and **11' .** A color filter and a black matrix (both not shown) are provided on one substrate **11** (color filter substrate). A switching element (typically TFT, not shown) for controlling electrooptic properties of liquid crystals, a scanning line (not shown) for providing a gate signal to the switching element, a signal line (not shown) for providing a source signal to the switching element, and a pixel electrode and a counter electrode (both not shown) are provided on the other substrate (active matrix substrate) **11'.** Note that the color filter may be provided on an active matrix substrate **11'** side. A distance (cell gap) between the substrates **11** and **11'** is controlled by a spacer (not shown). An aligned film (not shown) formed of polyimide, for example, is provided on a side in contact with the liquid crystal layer **12** of the substrates **11** and **11'.**

Any appropriate drive mode can be employed for drive mode of the liquid crystal cell **10** as long as effects of the present invention can be obtained. Specific examples of the drive mode include STN (Super Twisted Nematic) mode, TN (Twisted Nematic) mode, IPS (In-Plane Switching) mode, VA (Vertical Aligned) mode, OCB (Optically AlignedBirefringence)mode,HAN(Hybrid Aligned Nematic) mode, and ASM (Axially Symmetric Aligned Microcell) mode. The VA mode and the OCB mode are preferred.

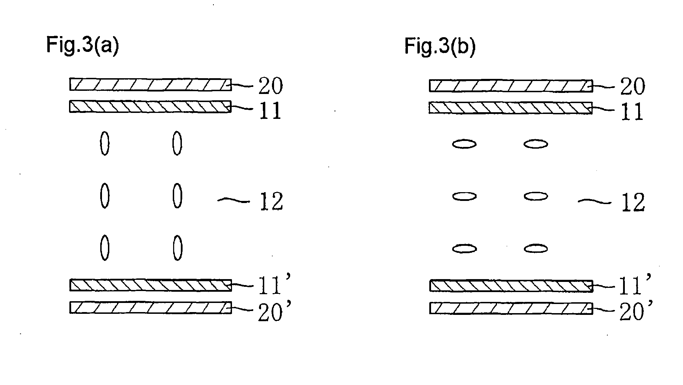

Figs. **3(a)** and **3(b)** are each a schematic sectional view explaining an alignment state of liquid crystal molecules in VA mode. As shown in Fig. **3(a)**, the liquid crystal molecules are aligned vertically to surfaces of the substrates **11** and **11'** under no voltage application. Such vertical alignment may be realized by arranging nematic liquid crystals having negative dielectric anisotropy between substrates each having formed thereon a vertically aligned film (not shown). Light enters from a surface of one substrate **11** in such a state, and linear polarized light allowed to pass through the first polarizer **20** and to enter the liquid crystal layer **12** advances along long axes of vertically aligned liquid crystal molecules. No birefringence generates in a long axis direction of the liquid crystal molecules such that incident light advances without changing a polarization direction and is absorbed by the second polarizer **20'** having a polarization axis perpendicular to the first polarizer **20.** In this way, dark display is obtained under no voltage application (normallyblackmode). As shown in Fig. **3(b),** long axes of the liquid crystal molecules align parallel to the surfaces of the substrates under voltage application between electrodes. The liquid crystal molecules exhibit birefringence with respect to linear polarized light entering the liquid crystal layer **12** in such a state, and a polarization state of incident light varies depending on inclination of the liquid crystal molecules. Light allowed to pass through the liquid crystal layer under application of a predetermined maximum voltage rotates its polarization direction by 90°, for example, into linear polarized light and passes through the second polarizer **20',** to thereby provide light display. Return to a state under no voltage application provides dark display again by alignment control force. The inclination of the liquid crystal molecules is controlled by varying an application voltage. Therefore, an intensity of transmitted light from the second polarizer **20'** may change, to thereby provide gradient display.

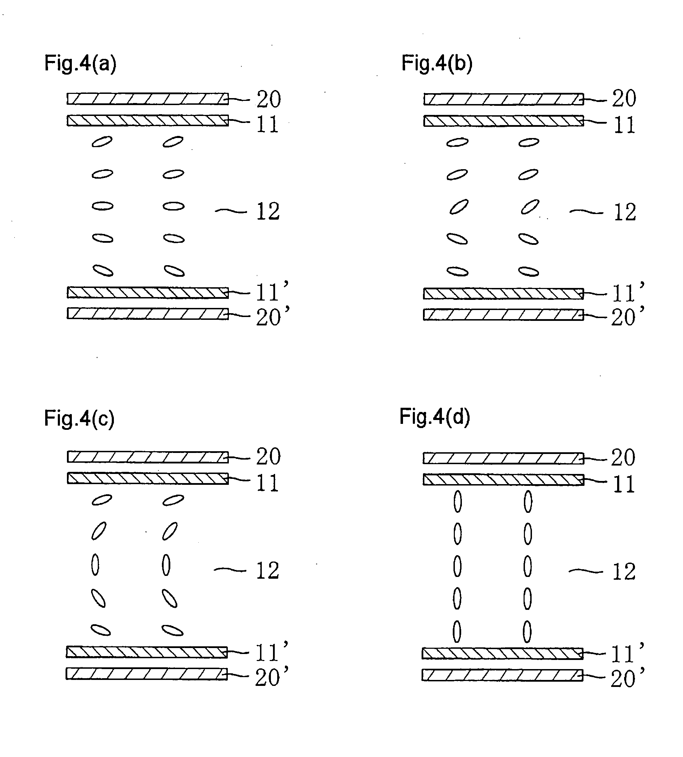

Figs. **4(a)** to **4(d)** are each a schematic sectional view explaining an alignment state of liquid crystal molecules in OCB mode. The OCB mode refers to drive mode in which the liquid crystal layer **12** is formed of so-called bend alignment. As shown in Fig. **4(c),** the bend alignment refers to an alignment state in which: nematic liquid crystal molecules are aligned at a substantially parallel angle (alignment angle) in a vicinity of a substrate; the alignment angle forms a vertical angle with respect to a plane of the substrate toward the center of the liquid crystal layer; the alignment changes progressively and continuously to be parallel to the opposing substrate surface away from the center of the liquid crystal layer; and no twisted structure exists throughout the liquid crystal layer. Such bend alignment is formed as described below. As shown in Fig. **4(a)**, the liquid crystal molecules have substantially homogenous alignment in a state in the absence of an electric field (initial state). However, the liquid crystal molecules each have a pretilt angle, and a pretilt angle in the vicinity of the substrate differs from a pretilt angle in the vicinity of the opposing substrate. Upon application of a predetermined bias voltage (typically, 1.5 V to 1.9 V) (under low voltage application), the liquid crystal molecules undergo a spray alignment as shown in Fig. **4(b)** and transfer to a bend alignment as shown in Fig. **4(c).** Upon application of a display voltage (typically, 5 V to 7 V) (under high voltage application), the liquid crystal molecules in a bend alignment state align substantially vertically to the surface of the substrate as shown in Fig. **4(d)** . In normally white display mode, light allowed to pass through the first polarizer 20 and to enter the liquid crystal layer in a state as shown in Fig. **4(d)** under high voltage application advances without changing a polarization direction and is absorbed by the second polarizer **20'**, to thereby provide dark display. Reduction in display voltage returns the liquid crystal molecules into bend alignment by alignment control force of rubbing treatment, to thereby provide light display again. The inclination of the liquid crystal molecules is controlled by varying a display voltage. Therefore, an intensity of transmitted light from the polarizer may change, to thereby provide gradient display. A liquid crystal display apparatus provided with a liquid crystal cell of OCB mode allows very high speed switching of phase transfer from spray alignment state to bend alignment state, and thus has a characteristic of better movie display properties than those of a liquid crystal display apparatus provided with a liquid crystal cell of other drive mode such as TN mode or IPS mode.

The liquid crystal panel as described above may suitably be used for a liquid crystal display apparatus such as a personal computer, a liquid crystal television, a cellular phone, a portable digital assistance (PDA), or a projector.

### B. Polarizing plates

### B-1. Structures of polarizing plates

In the present invention, the "polarizing plate" refers to an optical element arranged on each side of a liquid crystal cell and including a polarizer. The polarizing plate may employ any appropriate structure as long as the polarizing plate is an optical element including a polarizer. Typical examples of the polarizing plate include: a polarizing plate having a structure of "protective layer/polarizer/protective layer"; a polarizing plate having a structure of "protective layer/polarizer/protective layer/optical compensation layer"; a polarizing plate having a structure of "protective layer/polarizer/protective layer/optical compensation layer/optical compensation layer"; a polarizing plate having a structure of "protective layer/polarizer/optical compensation layer"; and a polarizing plate having a structure of "protective layer/polarizer/optical compensation layer/optical compensation layer". Typical examples of the optical compensation layer include the first optical compensation layer, the second optical compensation layer, and the other optical compensation layer described in the above section A.

In the present invention, the first polarizing plate is arranged on one side of the liquid crystal cell, and the second polarizing plate is arranged on another side of the liquid crystal cell. The structures of the first polarizing plate and the structure of the second polarizing plate may be identical to or different from each other.

### B-2. Waterproof treatment of polarizing plates

In the present invention, the first polarizing plate includes a first waterproof part on at least a part of its side surface, and/or the second polarizing plate includes a second waterproof part on at least a part of its side surface. Note that the "side surface" of the polarizing plate refers to an end surface of the polarizing plate in a thickness direction.

The first polarizing plate preferably has a substantially rectangular shape. In this case, the first waterproof part preferably includes four corners of the first polarizing plate. The first waterproof part includes the four corners of the first polarizing plate, to thereby completely provide a display without uneven brightness across an entire panel surface of a liquid crystal panel to be obtained.

The first waterproof part is provided for preferably 1/10 or more, more preferably 1/4 or more, furthermore preferably 1/2 or more, particularly preferably 3/4 of the side surface, and most preferably the entire side surface of the first polarizing plate. The waterproof part is provided to an area as large as possible of the side surface of the first polarizing plate, to thereby further completely provide a display without uneven brightness across an entire panel surface of a liquid crystal panel to be obtained.

The second polarizing plate preferably has a substantially rectangular shape. In this case, the second waterproof part preferably includes four corners of the second polarizing plate. The second waterproof part includes the four corners of the second polarizing plate, to thereby completely provide a display without uneven brightness across an entire panel surface of a liquid crystal panel to be obtained.

The second waterproof part is provided for preferably 1/10 or more, more preferably 1/4 or more, furthermore preferably 1/2 or more, particularly preferably 3/4 of the side surface, and most preferably the entire side surface of the second polarizing plate. The waterproof part is provided to an area as large as possible of the side surface of the second polarizing plate, to thereby further completely provide a display without uneven brightness across an entire panel surface of a liquid crystal panel to be obtained.

The first waterproof part and the second waterproof part each have a water contact angle of preferably 80° or more, and more preferably 100° or more. A water contact angle of 80° or more can develop sufficient water repellent property.

The first waterproof part and the second waterproof part can be provided by employing any appropriate waterproof method. Preferably, a waterproof part can be provided by applying a waterproof agent by spraying or the like on the side surface of the first polarizing plate or the second polarizing plate.

The waterproof agent may employ any appropriate waterproof agent. For example, a releasing agent may be used as the waterproof agent. Examples of the releasing agent include: a silicone-based releasing agent such as dimethyl silicone oil, dimethyl silicone rubber, a silicone resin, or an organic modified silicone resin; a fatty ester-based releasing agent such as ethylene glycol fatty ester, sorbitol fatty ester, or polyoxyethylene fatty ester; a phosphate ester-based releasing agent such as polyoxyalkylene phosphate ester; an alcohol-based releasing agent such as polyoxyalkylene glycol, glycols, or polyoxyethylene higher alcohol ether; and fluorine-based releasing agent such as a fluorine resin including polytetrafluoroethylene or a tetrafluoroethylene/perfluoroalkyl vinyl ether copolymer, vinylidene fluoride, fluorine rubber such as hexafluoropropylene-based rubber, a fluorine-based surfactant, fluorinated carbon, fluorine rubber latex, or a fluorine-containing resin. One kind of releasing agent may be used alone, or two or more kinds thereof may be used in combination. Further, the releasing agent may be used by dissolving in any appropriate solvent.

### C. Optical compensation layers

In the present invention, any appropriate optical compensation layer may be employed without inhibiting the purpose of the present invention. Examples of the optical compensation layer include: an optical compensation layer having a refractive index profile of nx > ny = nz; an optical compensation layer having a refractive index profile of nx > ny > nz; an optical compensation layer having a refractive index profile of nx = ny > nz; and an optical compensation layer having a refractive index profile of nx = ny < nz.

### C-1. First optical compensation layer

The first optical compensation layermay employ any appropriate optical compensation layer as described above. A typical specific example thereof is an optical compensationlayer having the following properties.

The first optical compensation layer has an absolute value of photoelastic coefficient of preferably 40×10⁻¹² m²/N or less, more preferably 0.2×10⁻¹² to 35×10⁻¹² m²/N, and furthermore preferably 0.2×10⁻¹² to 30×10⁻¹² m²/N. The absolute value of photoelastic coefficient is adjusted within the above ranges, to thereby effectively suppress display unevenness.

The first optical compensation layer preferably has a refractive index profile of nx > ny ≥ nz. Further, the first optical compensation layer preferably has so-called reverse wavelength dispersion property. Specifically, in-plane retardations preferably have a relationship of Δnd(380) < And(550) < Δnd(780). More preferably, the in-plane retardations preferably have a relationship of And(780)/And(550) > 1.10. Such relationships can realize favorable optical compensation throughout a wide region of visible light.

As shown in Figs. **1(a)** and **2(a),** in the embodiment where the first optical compensation layer may serve as a protective layer on the liquid crystal cell side of the first polarizer or the second polarizer, a lower limit of the in-plane retardation Δnd(550) of the first optical compensation layer is preferably 90 nm or more, more preferably 120 nm or more, and furthermore preferably 130 nm or more. Meanwhile, an upper limit of Δnd(550) is preferably 200 nm or less, more preferably 170 nm or less, and furthermore preferably 160 nm or less.

As shown in Figs. **1(a)** and Fig. **2(a),** in the embodiment where the protective layer is provided between the first polarizer or the second polarizer and the first optical compensation layer arranged adjacent to the liquid crystal cell side of the protective layer, a lower limit of the in-plane retardation And(550) of the first optical compensation layer is preferably 50 nm or more, more preferably 70 nm or more, and furthermore preferably 75 nm or more. Meanwhile, an upper limit of Δnd(550) is preferably 150 nm or less, more preferably 110 nm or less, and furthermore preferably 100 nm or less.

The thickness of the first optical compensation layer may employ any appropriate thickness as long as the effects of the present invention can be provided. Specifically, the thickness is preferably 20 to 160 µm, more preferably 40 to 140 µm, and furthermore preferably 60 to 120 µm.

The first optical compensation layer may typically be formed through stretching treatment of a polymer film. For example, the kind, stretching conditions, stretching method, and the like of the polymer are appropriately selected, to thereby provide a first optical compensation layer having optical properties (refractive index profile, in-plane retardations, and photoelastic coefficient) described above.

A material to be included in the polymer film may employ any appropriate material, but the polymer film preferably contains a cellulose-based material.

The cellulose-based material is preferably substituted by an acetyl group and a propionyl group. A lower limit of a degree of substitution of the cellulose-based material "DSac (degree of acetyl substitution) + DSpr (degree of propionyl substitution) " (indicating how many of three hydroxyl groups present in a repeating unit of cellulose is substituted by an acetyl group or a propionyl group on average) is preferably 2 or more, more preferably 2.3 or more, and furthermore preferably 2.6 or more. An upper limit of "DSac + DSpr" is preferably 3 or less, more preferably 2.9 or less, and furthermore preferably 2.8 or less. The degree of substitution of the cellulose-based material is adjusted within the above ranges, to thereby provide an optical compensation layer having a desired refractive index profile as described above.

A lower limit of DSpr (degree of propionyl substitution) is preferably 1 or more, more preferably 2 or more, and furthermore preferably 2.5 or more. An upper limit of DSpr is preferably 3 or less, more preferably 2.9 or less, and furthermore preferably 2.8 or less. DSpr is adjusted within the above ranges, to thereby improve solubility of the cellulose-based material in a solvent and facilitate control of the thickness of the first optical compensation layer to be obtained. Further, "DSac + DSpr" is adjusted within the above ranges and DSpr is adjusted within the above ranges, to thereby provide an optical compensation layer having the optical properties described above and having reverse wavelength dispersion property.

DSac (degree of acetyl substitution) and DSpr (degree of propionyl substitution) can be determined by a method described in paragraphs [0016] to [0019] of JP 2003-315538 A.

The cellulose-based material may have a substituent excluding the acetyl group and the propionyl group. Examples of the other substituent include: an ester group such as a butyrate group; and an ether group such as an alkyl ether group or an aralkylene ether group.

A number average molecular weight of the cellulose-based material is preferably 5, 000 to 100, 000, and more preferably 10, 000 to 70, 000. The number average molecular weight thereof is adjusted within the above ranges, to thereby provide excellent productivity and favorable mechanical strength.

A method of substituting the acetyl group and propionyl group may employ any appropriate method. For example, cellulose may be treated with a strong caustic soda solution to prepare alkali cellulose, and alkali cellulose and a predetermined amount of a mixture of acetic anhydride and propionic anhydride are mixed for acylation. An acyl group is partly hydrolyzed for adjusting the degree of substitution "DSac + DSpr".

The polymer film may contain any appropriate polymer material. Examples of the polymer material include: a cellulose ester such as cellulose butyrate; and a cellulose ether such as methyl cellulose or ethyl cellulose. The polymer film may contain additives such as a plasticizer, a heat stabilizer, and a UV stabilizer as required.

### C-2. Second optical compensation layer

The second optical compensation layer may employ any appropriate optical compensation layer. Atypical specific example thereof is an optical compensation layer having the following properties.

The second optical compensation layer preferably has a refractive index profile of nx = ny ≥ nz. Further, thickness direction retardations of the second optical compensation layer preferably have a relationship of Rth (380) > Rth (550) > Rth (780). More preferably, the thickness direction retardations thereof preferably have relationship of Rth(780)/Rth(550) < 0.95.

A lower limit of the thickness direction retardation Rth (550) of the second optical compensation layer is preferably 10 nm or more, more preferably 20 nm or more, and furthermore preferably 50 nm or more. Meanwhile, an upper limit of the thickness direction retardation Rth(550) is preferably 1, 000 nm or less, more preferably 500 nm or less, and furthermore preferably 250 nm or less.

The second optical compensation layer may be a monolayer or a laminate of two or more layers. In the laminate, the material used for forming each layer and the thickness of each layer may appropriately be set as long as the laminate as a whole has optical properties as described above.

The thickness of the second optical compensation layer may employ any appropriate thickness as long as the effects of the present invention can be provided. Specifically, the thickness is preferably 0.1 to 50 µm, more preferably 0.5 to 30 µm, and furthermore preferably 1 to 10 µm.

A material used for forming the second optical compensation layer may employ any appropriate material as long as the optical properties as described above can be obtained. An example of the material is a non-liquid crystalline material. A particularly preferred example thereof is a non-liquid crystalline polymer. The non-liquid crystalline material differs from a liquid crystalline material and may form a film having optical uniaxial property of nx = ny > nz due to its property regardless of alignment property of a substrate. As a result, not only an aligned substrate but also a non-aligned substrate may be used. Further, even in the case where a non-aligned substrate is used, a step of applying an aligned film to its surface, laminating an aligned film thereon, or the like may be omitted.

A preferred example of the non-liquid crystalline material includes a polymer such as polyamide, polyimide, polyester, polyetherketone, polyamideimide, or polyesterimide since such a material has excellent thermal resistance, excellent chemical resistance, excellent transparency, and sufficient rigidity. One type of polymer may be used, or a mixture of two or more types thereof having different functional groups such as a mixture of polyaryletherketone and polyamide may be used. Of those, polyimide is particularly preferred in view of high transparency, high alignment ability, and high extension.

A molecular weight of the polymer is not particularly limited. However, the polymer has a weight average molecular weight (Mw) of preferably within a range of 1, 000 to 1, 000, 000, more preferably within a range of 2,000 to 500,000, for example.

Polyimide which has high in-plane alignment ability and which is soluble in an organic solvent is preferred as polyimide used in the present invention, for example. More specifically, a polymer disclosed in JP 2000-511296 A, containing a condensation polymerization product of 9, 9-bis (aminoaryl) fluorene and aromatic tetracarboxylic dianhydride, and containing at least one repeating unit represented by the following formula (1) can be used.

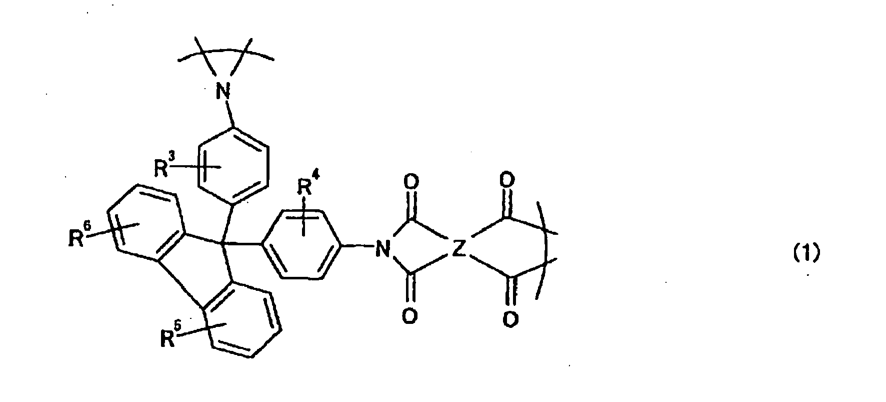

In the above formula (1), R³ to R⁶ independently represent at least one type of substituent selected from hydrogen, a halogen, a phenyl group, a phenyl group substituted with 1 to 4 halogen atoms or 1 to 4 alkyl groups each having 1 to 10 carbon atoms, and an alkyl group having 1 to 10 carbon atoms. Preferably, R³ to R⁶ independently represent at least one type of substituent selected from a halogen, a phenyl group, a phenyl group substituted with 1 to 4 halogen atoms or 1 to 4 alkyl groups each having 1 to 10 carbon atoms, and an alkyl group having 1 to 10 carbon atoms.

In the above formula (1), Z represents a tetravalent aromatic group having 6 to 20 carbon atoms, and preferably represents a pyromellitic group, a polycyclic aromatic group, a derivative of the polycyclic aromatic group, or a group represented by the following formula (2), for example.

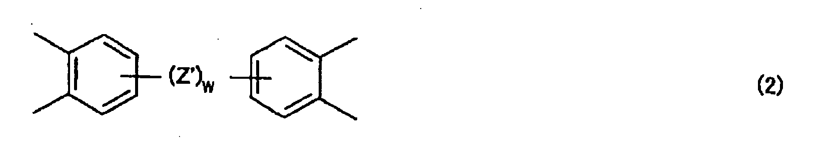

In the above formula (2), Z' represents a covalent bond, a C(R⁷)₂ group, a CO group, an O atom, an S atom, an SO₂ group, an Si (C₂H₅) ₂ group, or an NR⁸ group. A plurality of Z' s may be the same or different from each other. **w** represents an integer of 1 to 10. R⁷s independently represent hydrogen or a C(R⁹) ₃ group. R⁸ represents hydrogen, an alkyl group having 1 to about 20 carbon atoms, or an aryl group having 6 to 20 carbon atoms. A plurality of R⁸s may be the same or different from each other. R⁹s independently represent hydrogen, fluorine, or chlorine.

An example of the polycyclic aromatic group includes a tetravalent group derived fromnaphthalene, fluorene, benzofluorene, or anthracene. An example of the substituted derivative of the polycyclic aromatic group includes the above polycyclic aromatic group substituted with at least a group selected from an alkyl group having 1 to 10 carbon atoms, a fluorinated derivative thereof, and a halogen such as F or Cl.

Other examples of the polyimide include: a homopolymer disclosed in JP 08-511812 A and containing a repeating unit represented by the following general formula (3) or (4) ; and polyimide disclosed therein and containing a repeating unit represented by the following general formula (5). Note that, polyimide represented by the following formula (5) is a preferred form of the homopolymer represented by the following formula (3).

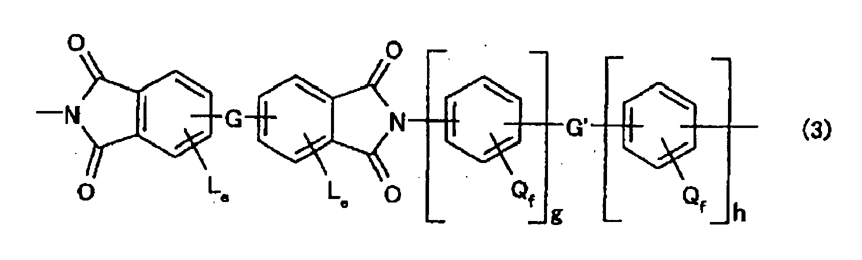

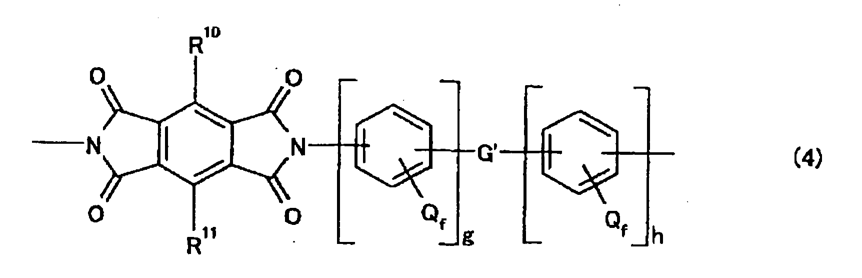

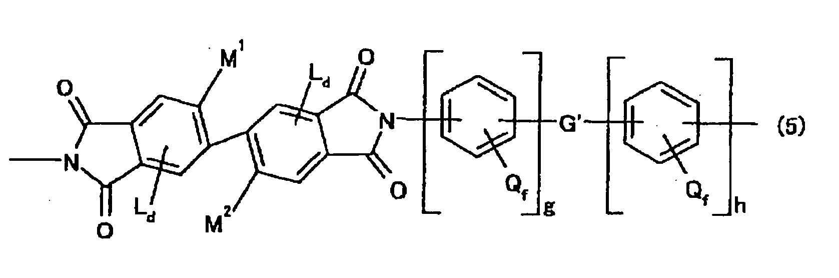

In the above general formulae (3) to (5), G and G' independently represent a covalent bond, a CH₂ group, a C(CH₃)₂ group, a C(CF₃)₂ group, a C (CX₃) ₂ group (wherein, X represents a halogen), a CO group, an O atom, an S atom, an SO₂ group, an Si (CH₂CH₃) ₂ group, or an N (CH₃) group, for example. G and G' may be the same or different from each other.

In the above formulae (3) and (5), L is a substituent, and **d** and **e** each represent the number of the substituents. L represents a halogen, an alkyl group having 1 to 3 carbon atoms, a halogenated alkyl group having 1 to 3 carbon atoms, a phenyl group, or a substituted phenyl group, for example. A plurality of Ls may be the same or different from each other. An example of the substituted phenyl group includes a substituted phenyl group having at least one type of substituent selected from a halogen, an alkyl group having 1 to 3 carbon atoms, and a halogenated alkyl group having 1 to 3 carbon atoms, for example. Examples of the halogen include fluorine, chlorine, bromine, and iodine. **d** represents an integer of 0 to 2, and **e** represents an integer of 0 to 3.

In the above formulae (3) to (5), Q is a substituent, and **f** represents the number of the substituents. Q represents an atom or a group selected from hydrogen, a halogen, an alkyl group, a substituted alkyl group, a nitro group, a cyano group, a thioalkyl group, an alkoxy group, an aryl group, a substituted aryl group, an alkyl ester group, and a substituted alkyl ester group, for example . A plurality of Qs may be the same or different from each other. Examples of the halogen include fluorine, chlorine, bromine, and iodine. An example of the substituted alkyl group includes a halogenated alkyl group. An example of the substituted aryl group includes a halogenated aryl group. **f** represents an integer of 0 to 4, and **g** represents an integer of 0 to 3. **h** represents an integer of 1 to 3. **g** and **h** are each preferably larger than 1.

In the above formula (4), R¹⁰ and R¹¹ independently represent an atom or a group selected from hydrogen, a halogen, a phenyl group, a substituted phenyl group, an alkyl group, and a substituted alkyl group. Preferably, R¹⁰ and R¹¹ independently represent a halogenated alkyl group.

In the above formula (5), M¹ and M² independently represent a halogen, an alkyl group having 1 to 3 carbon atoms, a halogenated alkyl group having 1 to 3 carbon atoms, a phenyl group, or a substituted phenyl group, for example. Examples of the halogen include fluorine, chlorine, bromine, and iodine. An example of the substituted phenyl group includes a substituted phenyl group having at least one type of substituent selected from the group consisting of a halogen, an alkyl group having 1 to 3 carbon atoms, and a halogenated alkyl group having 1 to 3 carbon atoms.

A specific example of the polyimide represented by the above formula (3) includes a compound represented by the following formula (6)

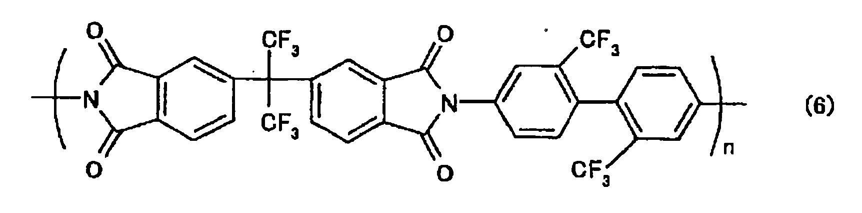

Another example of the polyimide includes a copolymer prepared through arbitrary copolymerization of acid dianhydride having a skeleton (repeating unit) other than that as described above and diamine.

An example of the acid dianhydride includes an aromatic tetracarboxylic dianhydride. Examples of the aromatic tetracarboxylic dianhydride include pyromellitic dianhydride, benzophenone tetracarboxylic dianhydride, naphthalene tetracarboxylic dianhydride, heterocyclic aromatic tetracarboxylic dianhydride, and 2,2'-substituted biphenyltetracarboxylic dianhydride.

Examples of the pyromellitic dianhydride include: pyromellitic dianhydride; 3,6-diphenyl pyromellitic dianhydride; 3,6-bis(trifluoromethyl)pyromellitic dianhydride; 3, 6-dibromopyromellitic dianhydride;and3,6-dichloropyromellitic dianhydride. Examples of the benzophenone tetracarboxylic dianhydride include: 3,3',4,4'-benzophenone tetracarboxylic dianhydride; 2,3,3',4'-benzophenone tetracarboxylic dianhydride; and 2,2',3,3'-benzophenone tetracarboxylic dianhydride. Examples of the naphthalene tetracarboxylic dianhydride include: 2,3,6,7-naphthalene tetracarboxylic dianhydride; 1,2,5,6-naphthalene tetracarboxylic dianhydride; and 2,6-dichloronaphthalene-1,4,5,8-tetracarboxylic dianhydride. Examples of the heterocyclic aromatic tetracarboxylic dianhydride include: thiophene-2,3,4,5-tetracarboxylic dianhydride; pyrazine-2,3,5,6-tetracarboxylic dianhydride; and pyridine-2,3,5,6-tetracarboxylic dianhydride. Examples of the 2,2'-substituted biphenyltetracarboxylic dianhydride include: 2,2'-dibromo-4,4',5,5'-biphenyltetracarboxylic dianhydride; 2,2' -dichloro-4, 4 ' , 5, 5 ' -biphenyltetracarboxylic dianhydride; and 2,2'-bis(trifluoromethyl)-4,4',5,5'-biphenyltetracarboxylic dianhydride.

Further examples of the aromatic tetracarboxylic dianhydride include: 3,3',4,4'-biphenyltetracarboxylic dianhydride; bis(2,3-dicarboxyphenyl)methane dianhydride; bis(2,5,6-trifluoro-3,4-dicarboxyphenyl)methane dianhydride; 2,2-bis(3,4-dicarboxyphenyl)-1,1,1,3,3,3-hexafluoropropane dianhydride; 4,4'-bis(3,4-dicarboxyphenyl)-2,2-diphenylpropane dianhydride; bis(3,4-dicarboxyphenyl)ether dianhydride; 4,4'-oxydiphthalic dianhydride; bis(3,4-dicarboxyphenyl)sulfonic dianhydride; 3,3',4,4'-diphenylsulfone tetracarboxylic dianhydride; 4,4'-[4,4'-isopropylidene-di(p-phenyleneoxy)]bis(phthalic anhydride); N,N-(3,4-dicarboxyphenyl)-N-methylamine dianhydride; and bis(3,4-dicarboxyphenyl)diethylsilane dianhydride.

Of those, the aromatic tetracarboxylic dianhydride is preferably 2,2'-substituted biphenyltetracarboxylic dianhydride, more preferably 2,2'-bis(trihalomethyl)-4,4',5,5'-biphenyltetracarboxylic dianhydride, and furthermore preferably 2,2'-bis(trifluoromethyl)-4,4',5,5'-biphenyltetracarboxylic dianhydride.

An example of the diamine includes aromatic diamine. Specific examples of the aromatic diamine include benzenediamine, diaminobenzophenone, naphthalenediamine, heterocyclic aromatic diamine, and other aromatic diamines.

Examples of the benzenediamine include benzenediamines such as o-, m-, or p-phenylenediamine, 2,4-diaminotoluene, 1,4-diamino-2-methoxybenzene, 1,4-diamino-2-phenylbenzene, and 1, 3-diamino-4-chlorobenzene. Examples of the diaminobenzophenone include 2,2'-diaminobenzophenone and 3,3'-diaminobenzophenone. Examples of the naphthalenediamine include 1, 8-diaminonaphthalene and 1, 5-diaminonaphthalene. Examples of the heterocyclic aromatic diamine include 2,6-diaminopyridine, 2,4-diaminopyridine, and 2,4-diamino-S-triazine.

Further examples of the aromatic diamine include: 4,4'-diaminobiphenyl; 4,4'-diaminodiphenylmethane; 4,4'-(9-fluorenylidene)-dianiline; 2,2'-bis(trifluoromethyl)-4,4'-diaminobiphenyl; 3,3'-dichloro-4,4'-diaminodiphenylmethane; 2,2'-dichloro-4,4'-diaminobiphenyl; 2,2',5,5'-tetrachlorobenzidine; 2,2-bis(4-aminophenoxyphenyl)propane; 2,2-bis(4-aminophenyl)propane; 2,2-bis(4-aminophenyl)-1,1,1,3,3,3-hexafluoropropane; 4,4'-diaminodiphenyl ether; 3,4'-diaminodiphenyl ether; 1,3-bis(3-aminophenoxy)benzene; 1,3-bis(4-aminophenoxy)benzene; 1,4-bis(4-aminophenoxy)benzene; 4,4'-bis(4-aminophenoxy)biphenyl; 4,4'-bis(3-aminophenoxy)biphenyl; 2,2-bis[4-(4-aminophenoxy)phenyl]propane; 2,2-bis[4-(4-aminophenoxy)phenyl]-1,1,1,3,3,3-hexafluoropropan e; 4,4'-diaminodiphenyl thioether; and 4,4'-diaminodiphenylsulfone.

An example of the polyetherketone includes polyaryletherketone disclosed in JP 2001-049110 A and represented by the following general formula (7).

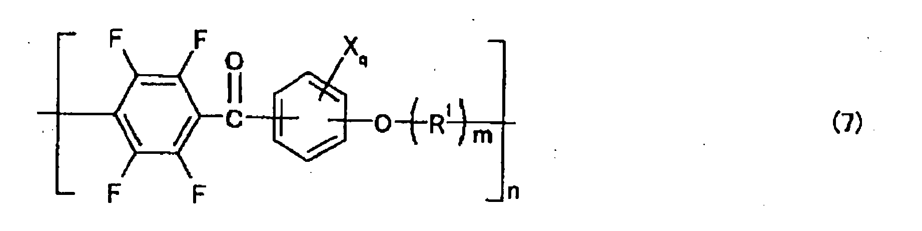

In the above formula (7), X represents a substituent, and q represents the number of the substituents. X represents a halogen atom, a lower alkyl group, a halogenated alkyl group, a lower alkoxy group, or a halogenated alkoxy group, for example. A plurality of Xs may be the same or different from each other.

Examples of the halogen atom include a fluorine atom, a bromine atom, a chlorine atom, and an iodine atom. Of those, a fluorine atom is preferred. The lower alkyl group is preferably an alkyl group having a straight chain or branched chain of 1 to 6 carbon atoms, more preferably an alkyl group having a straight chain or branched chain of 1 to 4 carbon atoms. More specifically, the lower alkyl group is preferably a methyl group, an ethyl group, a propyl group, an isopropyl group, a butyl group, an isobutyl group, a sec-butyl group, or a tert-butyl group, and particularly preferably a methyl group or an ethyl group. An example of the halogenated alkyl group includes a halide of the above lower alkyl group such as a trifluoromethyl group. The lower alkoxy group is preferably an alkoxy group having a straight chain or branched chain of 1 to 6 carbon atoms, more preferably an alkoxy group having a straight chain or branched chain of 1 to 4 carbon atoms. More specifically, the lower alkoxy group is preferably a methoxy group, an ethoxy group, a propoxy group, an isopropoxy group, a butoxy group, an isobutoxy group, a sec-butoxy group, or a tert-butoxy group, and particularly preferably a methoxy group or an ethoxy group. An example of the halogenated alkoxy group includes a halide of the above lower alkoxy group such as a trifluoromethoxy group.

In the above formula (7), **q** is an integer of 0 to 4. In the above formula (7), preferably, **q** = 0, and a carbonyl group and an oxygen atom of ether bonded to both ends of a benzene ring are located in para positions.

In the above formula (7), R¹ is a group represented by the following formula (8), and **m** is an integer of 0 or 1.

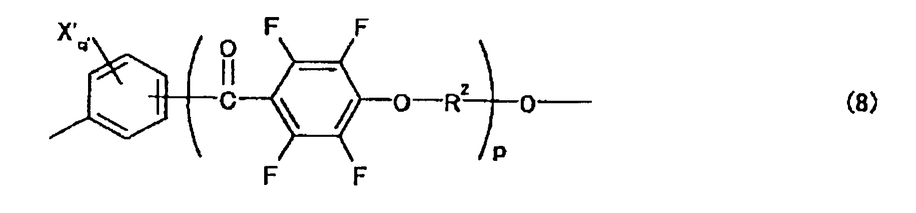

In the above formula (8), X' represents a substituent which is the same as X in the above formula (7), for example. In the above formula (8), a plurality of X's may be the same or different from each other. **q'** represents the number of the substituents X'. **q'** is an integer of 0 to 4, and **q'** is preferably 0. **p** is an integer of 0 or 1.

In the above formula (8), R² represents a divalent aromatic group. Examples of the divalent aromatic group include: an o-, m-, or p-phenylene group; and a divalent group derived from naphthalene, biphenyl, anthracene, o-, m-, or p-terphenyl, phenanthrene, dibenzofuran, biphenyl ether, or biphenyl sulfone. In the divalent aromatic group, hydrogen directly bonded to an aromatic group may be substituted with a halogen atom, a lower alkyl group, or a lower alkoxy group. Of those, R² is preferably an aromatic group selected from groups represented by the following formulae (9) to (15).

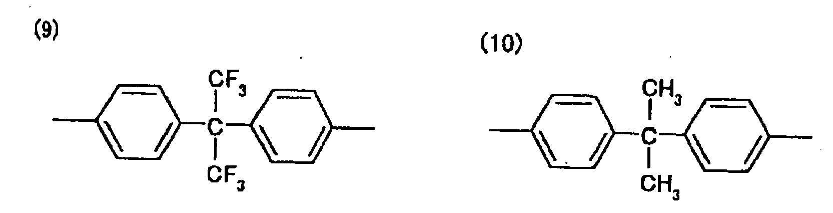

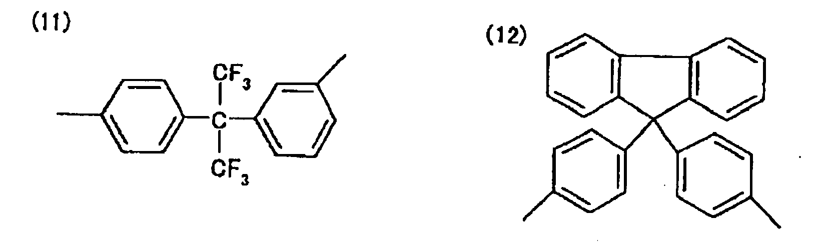

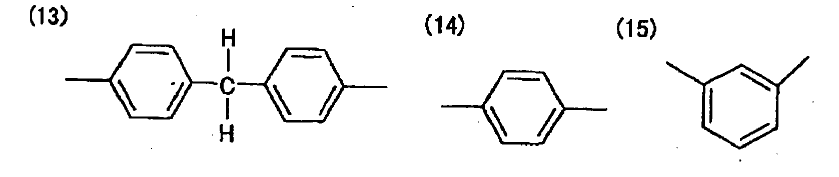

In the above formula (7), R¹ is preferably a group represented by the following formula (16) . In the following formula (16), R² and **p** are defined as those in the above formula (8).

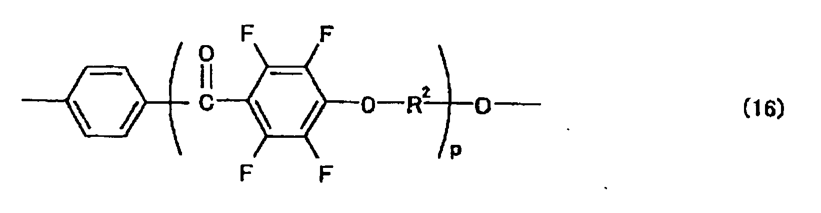

In the above formula (7), **n** represents a degree of polymerization. **n** falls within a range of 2 to 5,000, preferably within a range of 5 to 500, for example. Polymerization may involve polymerization of repeating units of the same structure or polymerization of repeating units of different structures. In the latter case, a polymerization form of the repeating units may be block polymerization or random polymerization.

Terminals of the polyaryletherketone represented by the above formula (7) are preferably a fluorine atom on a p-tetrafluorobenzoylene group side and a hydrogen atom on an oxyalkylene group side. Such polyaryletherketone can be represented by the following general formula (17), for example. In the following formula (17), **n** represents the same degree of polymerization as that in the above formula (7).

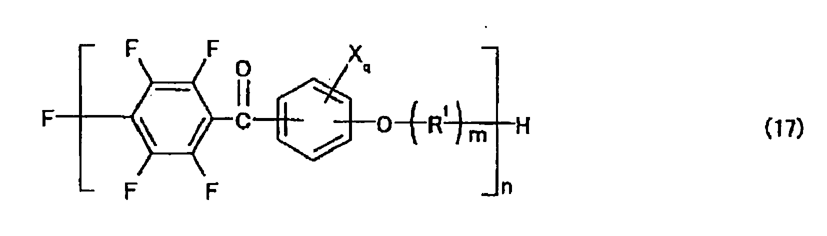

Specific examples of the polyaryletherketone represented by the above formula (7) include compounds represented by the following formulae (18) to (21). In each of the following formulae, **n** represents the same degree of polymerization as that in the above formula (7).

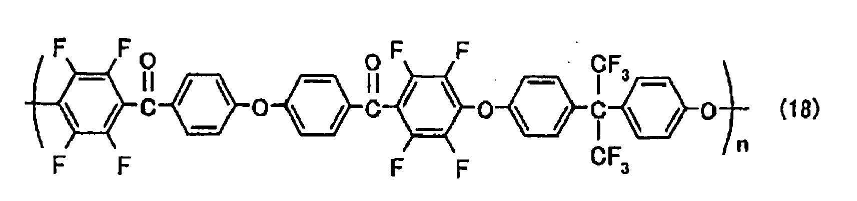

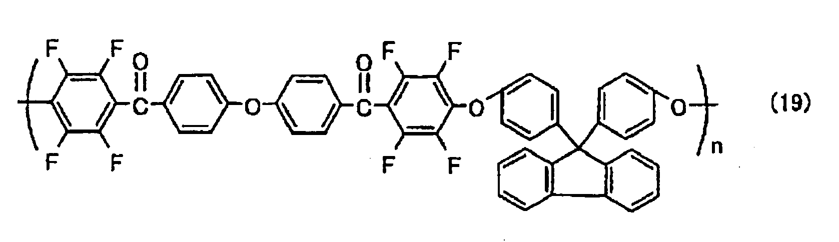

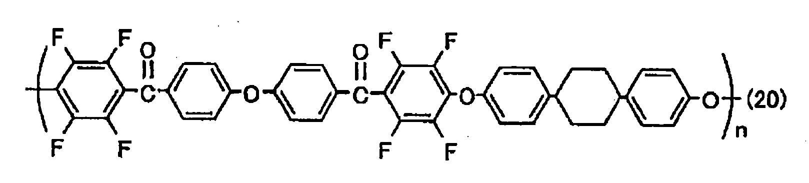

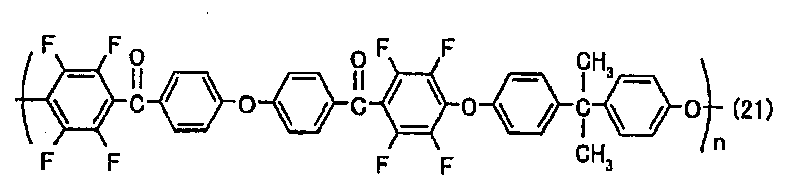

In addition, an example of polyamide or polyester includes polyamide or polyester disclosed in JP 10-508048 A. A repeating unit thereof can be represented by the following general formula (22), for example.

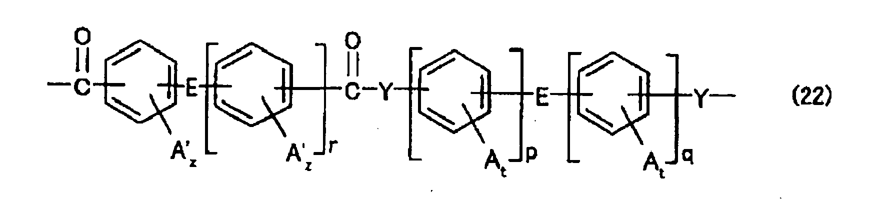

In the above formula (22), Y represents O or NH. E represents at least one selected from a covalent bond, an alkylene group having 2 carbon atoms, a halogenated alkylene group having 2 carbon atoms, a CH₂ group, a C(CX₃)₂ group (wherein, X is a halogen or hydrogen), a CO group, an O atom, an S atom, an SO₂ group, an Si(R)₂ group, and an N (R) group, for example. A plurality of Es may be the same or different from each other. In E, R is at least one of an alkyl group having 1 to 3 carbon atoms and a halogenated alkyl group having 1 to 3 carbon atoms, and is located in a meta or para position with respect to a carbonyl functional group or a Y group.

In the above formula (22), A and A' each represent a substituent, and **t** and **z** represent the numbers of the respective substituents. **p** represents an integer of 0 to 3, and **q** represents an integer of 1 to 3. **r** represents an integer of 0 to 3.

A is selected from hydrogen, a halogen, an alkyl group having 1 to 3 carbon atoms, a halogenated alkyl group having 1 to 3 carbon atoms, an alkoxy group represented by OR (wherein, R is defined as above), an aryl group, a substituted aryl group prepared through halogenation or the like, an alkoxycarbonyl group having 1 to 9 carbon atoms, an alkylcarbonyloxy group having 1 to 9 carbon atoms, an aryloxycarbonyl group having 1 to 12 carbon atoms, an arylcarbonyloxy group having 1 to 12 carbon atoms and its substituted derivatives, an arylcarbamoyl group having 1 to 12 carbon atoms, and arylcarbonylamino group having 1 to 12 carbon atoms and its substituted derivatives, for example. A plurality of As may be the same or different from each other. A' is selected from a halogen, an alkyl group having 1 to 3 carbon atoms, a halogenated alkyl group having 1 to 3 carbon atoms, a phenyl group, and a substituted phenyl group, for example. A plurality of A's may be the same or different from each other. Examples of the substituent on a phenyl ring of the substituted phenyl group include a halogen, an alkyl group having 1 to 3 carbon atoms, a halogenated alkyl group having 1 to 3 carbon atoms, and the combination thereof. **t** represents an integer of 0 to 4, and **z** represents an integer of 0 to 3.

The repeating unit of the polyamide or polyester represented by the above formula (22) is preferably a repeating unit represented by the following general formula (23).

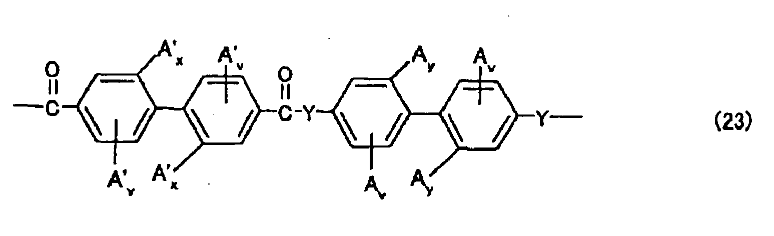

In the above formula (23), A, A', and Y are defined as those in the above formula (22). **v** represents an integer of 0 to 3, preferably an integer of 0 to 2. **x** and **y** are each 0 or 1, but are not both 0.

Next, description will be given of a method of producing the second optical compensation layer. Any appropriate method may be employed as the method of producing the second optical compensation layer as long as the effect of the present invention can be provided.

A solution of at least one polymer selected from the group consisting of polyamide, polyimide, polyester, polyetherketone, polyamideimide, and polyesterimide is applied to a transparent polymer film and is dried to form the polymer layer on the transparent polymer film. Then, the transparent polymer film and the polymer layer may be stretched or contracted integrally, to thereby obtain the second optical compensation layer.

Examples of the solvent of the coating solution (a polymer solution to be applied to a transparent polymer film) include, but not limited to: halogenated hydrocarbons such as chloroform, dichloromethane, carbon tetrachloride, dichloroethane, tetrachloroethane, trichloroethylene, tetrachloroethylene, chlorobenzene, and ortho-dichlorobenzene; phenols such as phenol and parachlorophenol; aromatic hydrocarbons such as benzene, toluene, xylene, methoxybenzene, and 1,2-dimethoxybenzene; ketone-based solvents such as acetone, methyl ethyl ketone, methyl isobutyl ketone, cyclohexanone, cyclopentanone, 2-pyrrolidone, and N-methyl-2-pyrrolidone; ester-based solvents such as ethyl acetate and butyl acetate; alcohol-based solvents such as t-butyl alcohol, glycerine, ethylene glycol, triethylene glycol, ethylene glycol monomethylether, diethylene glycol dimethylether, propylene glycol, dipropylene glycol, and 2-methyl-2,4-pentanediol; amide-based solvents such as dimethylformamide and dimethylacetamide; nitrile-based solvents such as acetonitrile and butyronitrile; ether-based solvents such as diethyl ether, dibutyl ether, and tetrahydrofurane; carbon disulfide; ethyl cellosolve; and butyl cellosolve. Of those, methyl isobutyl ketone is preferred, because non-liquid crystal materials exhibits high solubility in the solvent and the solvent does not corrode the substrate. Each of those solvents can be used alone, or two or more of them can be used in combination.

The application solution may have any appropriate concentration of the non-liquid crystalline polymer as long as the above-mentioned optical compensation layer can be obtained and the application solution may be applied. For example, the solution contains preferably 5 to 50 parts by weight, and more preferably 10 to 40 parts by weight of the non-liquid crystalline polymer with respect to 100 parts by weight of the solvent. The solution having a concentration within the above ranges has a viscosity allowing easy application.

The application solution may further contain various additives such as a stabilizer, a plasticizer, and metals as required.

The application solution may further contain another different resin as required. Examples of another different resin include various general-purpose resins, engineering plastics, a thermoplastic resin, and a thermosetting resin. Such a resin is used in combination, to thereby allow formation of an optical compensation layer having appropriate mechanical strength or durability in accordance with the purpose.

Examples of the general-purpose resin include polyethylene (PE), polypropylene (PP), polystyrene (PS),polymethylmethacrylate (PMMA), an ABS resin, and an AS resin. Examples of the engineering plastic include polyacetate (POM), polycarbonate (PC), polyamide (PA: nylon), polyethylene terephthalate (PET), and polybutylene terephthalate (PBT). Examples of the thermoplastic resin include polyphenylene sulfide (PPS), polyether sulfone (PES), polyketone (PK), polyimide (PI), polycyclohexane dimethanol terephthalate (PCT), polyallylate (PAR), and a liquid crystal polymer (LCP). Examples of the thermosetting resin include an epoxy resin and a phenol novolac resin.

The type and amount of another different resin to be added to the application solution may appropriately be set in accordance with the purpose. For example, such a resin is added to the non-liquid crystalline polymer in a ratio of preferably 0 to 50 mass%, and more preferably 0 to 30 mass%.

Examples of a method of applying the solution include: a spin coating method; a roll coating method; a flow coating method; a printing method; a dip coating method; a flow casting method; a bar coating method; and a gravure printing method. For application, a polymer layer superposition method may also be used as required.

After application, the solvent in the above-mentioned solution is evaporated and removed by drying such as natural drying, air drying, or heat drying (at 60 to 250°C, for example), to thereby form a film-like optical compensation layer.

The same film as that used for a protective layer to be described below may be used as the transparent polymer film.

The second optical compensation layer may be used by peeling the first optical compensation layer off from the laminate (laminate having the first optical compensation layer formed on the transparent polymer film) obtained as described above, or used as the laminate itself. In the case where the second optical compensation layer is used as a laminate and is further laminated with a polarizer, the transparent polymer film in the laminate may serve as a protective film of a polarizer to be described below.

### D. Polarizer

In the prevent invention, the first polarizing plate includes a first polarizer, and the second polarizer includes a second polarizer. Any appropriate polarizer may be employed as the first polarizer and the second polarizer used in the present invention depending on the purpose. Examples thereof include: a film prepared by adsorbing a dichromatic substance such as iodine or a dichromatic dye on a hydrophilic polymer film such as a polyvinyl alcohol-based film, a partially formalized polyvinyl alcohol-based film, or a partially saponified ethylene/vinyl acetate copolymer-based film and uniaxially stretching the film; and a polyene-based aligned film such as a dehydrated product of a polyvinyl alcohol-based film or a dehydrochlorinated product of a polyvinyl chloride-based film. Of those, a polarizer prepared by adsorbing a dichromatic substance such as iodine on a polyvinyl alcohol-based film and uniaxially stretching the film is particularly preferred because of its high polarized dichromaticity. A thickness of such a polarizer is generally, but not limited to, about 5 to 80 µm.

The polarizer prepared by adsorbing iodine on a polyvinyl alcohol-based film and uniaxially stretching the filmmay be produced by, for example: immersing a polyvinyl alcohol-based film in an aqueous solution of iodine for coloring; and stretching the film to a 3 to 7 times length of the original length. The aqueous solution may contain boric acid, zinc sulfate, zinc chloride, or the like as required, or the polyvinyl alcohol-based film may be immersed in an aqueous solution of potassium iodide or the like. Further, the polyvinyl alcohol-based film may be immersed and washed in water before coloring as required. Washing the polyvinyl alcohol-based film with water not only allows removal of contamination on a film surface or washing away of an antiblocking agent, but also provides an effect of preventing unevenness such as uneven coloring by swelling of the polyvinyl alcohol-based film. The stretching of the film may be performed after coloring of the film with iodine, performed during coloring of the film, or performed followed by coloring of the film with iodine. The stretching may be performed in an aqueous solution of boric acid, potassium iodide, or the like, or in a water bath.

### E. Protective layer

The protective layer is preferably transparent and colorless. The protective layer may employ any appropriate protective layer as long as it is capable of protecting a polarizer without inhibiting the effects of the present invention. Typical examples thereof include the following protective layers (1) to (3).

### E-1. Protective layer (1)

The in-plane retardation Δnd(550) of a protective layer (1) is preferably 0 nm or more and 10 nm or less, and more preferably 0 nm or more and 8 nm or less. The thickness direction retardation Rth(550) of the protective layer (1) is preferably 10 nm or more and 80 nm or less, more preferably 40 nm or more and 80 nm or less, and furthermore preferably 45 nm or more and 70 nm or less.

The thickness of the protective layer (1) may appropriately be set in accordance with the purpose. Specifically, the thickness is preferably 20 to 140 µm, more preferably 40 to 120 µm, and furthermore preferably 60 to 100 µm.

A material used for forming the protective layer (1) may employ any appropriate material. An example of the material is a plastic film having excellent transparency, mechanical strength, heat stability, moisture barrier properties, and the like. Specific examples of a resin used for forming the plastic film include an acetate resin such as triacetyl cellulose (TAC), a polyester resin, a polyether sulfone resin, a polysulfone resin, a polycarbonate resin, a polyamide resin, a polyimide resin, a polyolefin resin, an acrylic resin, a polynorbornene resin, a cellulose resin, a polyallylate resin, a polystyrene resin, a polyvinyl alcohol resin, a polyacrylic resin, and a mixture thereof. Further, an acrylic, urethane-based, acryl urethane-based, epoxy-based, silicone-based, etc. heat-curable resin or UV-curable resin may also be used. From viewpoints of polarization properties and durability, a TAC film having a surface subj ected to saponification treatment with an alkali or the like is preferred.

### E-2. Protective layer (2)

The in-plane retardation Δnd(550) of a protective layer (2) is preferably 0 nm or more and 10 nm or less, more preferably 0 nm or more and 6 nm or less, and furthermore preferably 0 nm or more and 3 nm or less. The thickness direction retardation Rth (550) of the protective layer (2) is preferably 0 nm or more and 20 nm or less, more preferably 0 nm or more and 10 nm or less, furthermore preferably 0 nm or more and 6 nm or less, and particularly preferably 0 or more and 3 or less.

The thickness of the protective layer (2) may appropriately be set in accordance with the purpose. Specifically, the thickness is preferably 20 to 200 µm, more preferably 30 to 100 µm, and furthermore preferably 35 to 95 µm.
a cellulose-based film is typically used as the protective layer (2) . Acellulose-based filmhaving a large thickness direction retardation (Rth) is subjected to appropriate treatment for reducing the thickness direction retardation (Rth), to thereby favorably obtain the protective layer (2).

The treatment for reducing the thickness direction retardation (Rth) may employ any appropriate treatment method. Examples thereof include: a method involving attaching a substrate formed of polyethylene terephthalate, polypropylene, stainless steel, or the like and having a solvent such as cyclopentanone or methyl ethyl ketone applied thereto together with a general cellulose-based film, drying the whole under heating (at about 80 to 150°C for about 3 to 10 minutes), and peeling off the substrate film; and a method involving applying a solution containing a norbornene-based resin, an acrylic resin, or the like dissolved in a solvent such as cyclopentanone or methyl ethyl ketone to a general cellulose-based film, drying the whole under heating (at about 80 to 150°C for about 3 to 10 minutes), and peeling off the applied film.

A preferred example of a material used for forming the cellulose-based resin is a fatty acid-substituted cellulose-based polymer such as diacetyl cellulose or triacetyl cellulose. Generally used triacetyl cellulose has a degree of acetic acid substitution of about 2.8. However, the degree of acetic acid substitution is preferably controlled to 1.8 to 2.7, and the degree of propionic acid substitution is more preferably controlled to 0.1 to 1, to thereby reduce the thickness direction retardation (Rth).

A plasticizer such as dibutyl phthalate, p-toluenesulfonanilide, or acetyl triethyl citrate may be added to the aliphatic acid-substituted cellulose-based polymer, to thereby allow control of the thickness direction retardation (Rth) to a small value. An addition amount of the plasticizer is preferably 40 parts by weight or less, more preferably 1 to 20 parts by weight, and furthermore preferably 1 to 15 parts by weight with respect to 100 parts by weight of the aliphatic acid-substituted cellulose-based polymer.

The above-mentioned techniques for reducing the thickness direction retardation (Rth) to a small value may appropriately be used in combination.

Another preferred specific example of the protective layer (2) is an acrylic resin film. A preferred example of the acrylic resin film is an acrylic resin film containing as a main component an acrylic resin (A) having a glutaric anhydride unit represented by the following structural formula (24) and described in JP 2005-314534 A. The acrylic resin (A) having a glutaric anhydride unit represented by the following structural formula (1) may have improved heat resistance. In the following structural formula (1), R¹ and R² may be identical to or different from each other, and each represent a hydrogen atom or an alkyl group having 1 to 5 carbon atoms, more preferably a hydrogen atom or a methyl group, and furthermore preferably a methyl group.

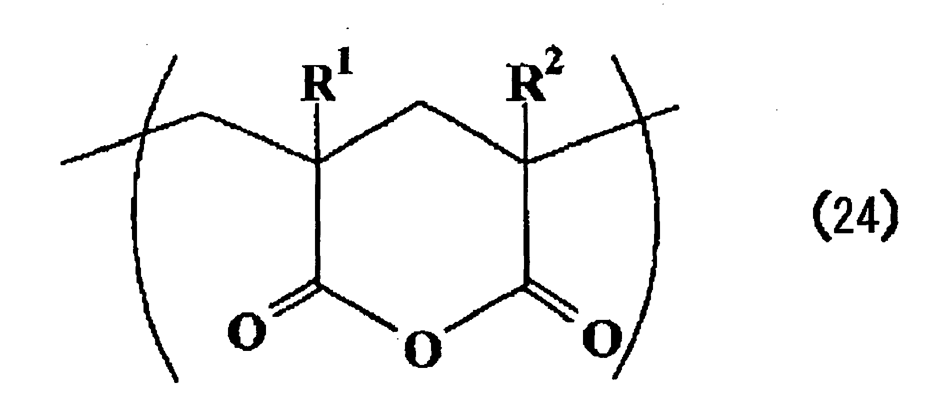

In the acrylic resin (A), a ratio of the glutaric anhydride unit represented by the structural formula (24) is preferably 20 to 40 wt%, and more preferably 25 to 35 wt%.

The acrylic resin (A) may contain one or two or more types of appropriate monomer units in addition to the glutaric anhydride unit represented by the structural formula (24). Apreferredexample of the monomer unit is a vinyl carboxylic acid alkyl ester unit. In the acrylic resin (A), a ratio of the vinyl carboxylic acid alkyl ester unit is preferably 60 to 80 wt%, and more preferably 65 to 75 wt%.

An example of the vinyl carboxylic acid alkyl ester unit is a unit represented by the following general formula (25). In the following general formula (25): R³ represents a hydrogen atom or an aliphatic or alicyclic hydrocarbon having 1 to 5 carbon atoms; and R⁴ represents an aliphatic hydrocarbon having 1 to 5 carbon atoms.

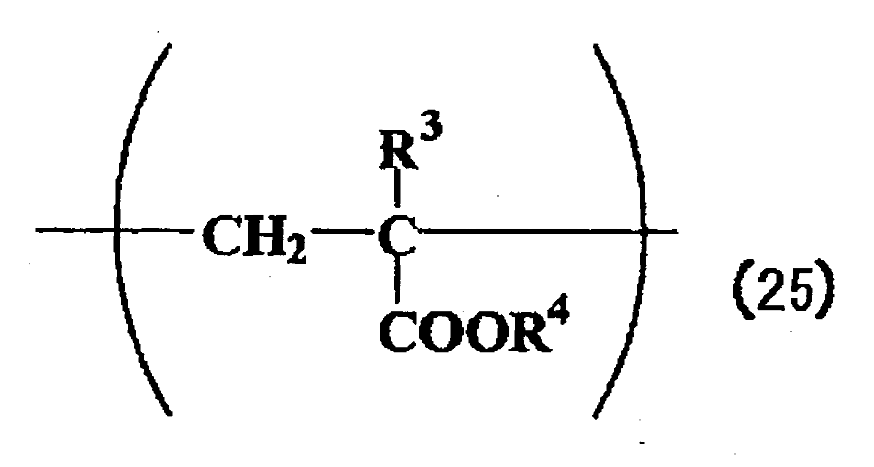

The acrylic resin (A) preferably has a weight average molecular weight of 80,000 to 150,000.

A ratio of the acrylic resin (A) in the acrylic resin film is preferably 60 to 90 wt%.

The acrylic resin film may contain one or two or more types of appropriate components in addition to the acrylic resin (A). Any appropriate component may be employed within a range not inhibiting the purpose of the present invention. Examples of the appropriate component include a resin except the acrylic resin (A), a UV absorber, an antioxidant, a lubricant, a plasticizer, a releasing agent, a color protection agent, a flame retardant, a nucleator, an antistatic agent, a pigment, and a colorant.

### E-3. Protective layer (3)

A polymer film formed of a resin composition as described in JP 2001-343529 A (WO 01/37007), for example, may be used for the protective layer (3) . To be specific, the resin composition refers to a mixture of: a thermoplastic resin having a substituted imide group or an unsubstituted imide group on a side chain; and a thermoplastic resin having a substituted phenyl group or an unsubstituted phenyl group, and a cyano group on a side chain. A specific example thereof is a resin composition containing: an alternating copolymer of isobutene and N-methylene maleimide; and an acrylonitrile/styrene copolymer. An extrusion molded product of such a resin composition may be used, for example.

Hereinafter, the present invention will be described more specifically by way of examples, but the present invention is not limited to the examples. Methods of measuring properties in examples are described below.

### (1) Measurement of retardations

Unless other methods are particularly described, refractive indices nx, ny, and nz of a sample film were measured with a spectroscopic ellipsometer (M-220, manufactured by JASCO Corporation), and in-plane retardations And and thickness direction retardations Rth were calculated. Measurement wavelengths were 380 nm, 550 nm, and 780 nm.

### (2) Measurement of photoelastic coefficient

A photoelastic coefficient of the sample film was measured with a spectroscopic ellipsometer (M-220, manufactured by JASCO Corporation).

### (3) Measurement of water contact angle

A liquid was dropped on a substrate by using a solid-liquid interface analyzer ("Drop Master 300", trade name, manufactured by Kyowa Interface Science Co., Ltd.), and a contact angle after 5 seconds was measured. Measuring conditions were for static contact angle measurement. Ultrapure water was used as water, and a liquid drop was 0.5 µl. The measurement was repeated 10 times for each substrate, and an average value of the measurements was used as a measured value.

### (4) Measurement of brightness

A brightness of a liquid crystal panel was measured by using a brightness measuring device ("CA-1500", trade name, manufactured by Konica Minolta Holdings, Inc.). Specifically, the measurement was conducted as described below. First, a liquid crystal panel was taken out of a liquid crystal display apparatus "BRAVIA 40-inch X-series" manufactured by Sony Corporation, and polarizing plates attached above and below a liquid crystal cell of the liquid crystal panel were peeled off. Then, polarizing plates produced in Examples or Comparative Examples were attached to both sides of the liquid crystal cell instead through an acrylicpressure-sensitive adhesive, to thereby produce a new liquid crystal panel. The produced liquid crystal panel was re-installed in the liquid crystal display apparatus, and the resultant was left standing under conditions of 60°C and 95% RH for 250 hours. Then, the whole was left standing at room temperature for 3 hours, and left standing for 3 hours while backlight was turned on. Unevenness in brightness of the liquid crystal panel was evaluated at a measuring distance of 1 m. The evaluation of unevenness in brightness was conducted by measuring the brightness of a white part and a black display part. Measurement positions of the white part and the black display part were as described below.
White part: point inside liquid crystal panel at 1/30 length of long side and 1/30 length of short side from corner
Black display part: point at center of liquid crystal panel

### [Example 1]

### (Formation of first optical compensation layer)

A cellulose ester film (available from Kaneka Corporation, trade name: KA, DSac (degree of acetyl substitution) = 0.04, DSpr (degree of propionyl substitution) = 2.76) having a thickness of 70 µm was stretched at a free end to a 1.5 times length at 145°C, to thereby obtain a first optical compensation layer having a thickness of 68 µm. The obtained first optical compensation layer had a photoelastic coefficient of 25x10⁻¹² (m²/N) . The obtained first optical compensation layer had in-plane retardations Δnd(380) of 65 nm, Δnd(550) of 90 nm, andAnd(780) of 105 nm and thickness direction retardations Rth(380) of 69 nm, Rth(550) of 95 nm, and Rth(780) of 111 nm. The obtained first optical compensation layer had a refractive index profile of nx > ny ≈ nz at 550 nm.

### (Production of polarizing plate provided with first optical compensation layer)

The first optical compensation layer obtained as described above was attached to a polarizing plate (available from Nitto Denko Corporation, trade name: SEG1224) having a structure of TAC protective film (available from FUJIFILM Corporation, trade name: TF80UL) /polarizer/TAC protective film (trade name: TF80UL) through a pressure-sensitive adhesive (thickness of 20 µm), to thereby obtain a polarizing plate provided with a first optical compensation layer. At this time, lamination was conducted such that a slow axis of the first optical compensation layer and a stretching axis (absorption axis) of the polarizer were substantially perpendicular to each other.

### (Formation of second optical compensation layer)

Polyimide synthesized from 2,2-bis(3,4-dicarboxyphenyl) hexafluoropropane dianhydride (6FDA) and 2,2'-bis(trifluoromethyl)-4,4'-diaminobiphenyl (TFMB) was dissolved in methyl isobutyl ketone (MIBK), to thereby prepare a 15 mass% polyimide solution. This solution was applied to a triacetyl cellulose substrate (transparent polymer film) to a thickness of 30 µm. Then, the whole was subjected to drying treatment at 100°C for 10 minutes, to thereby obtain a second optical compensation layer having a thickness of about 4 µm. The obtained second optical compensation layer had in-plane retardations And(380) of 0.4 nm, Δnd (550) of 0.3 nm, and Δnd(780) of 0.3 nm and thickness direction retardations Rth(380) of 178 nm, Rth(550) of 120 nm, and Rth(780) of 110 nm. The obtained second optical compensation layer had a refractive index profile of nx ≈ ny >,nz at 550 nm.

### (Production of polarizing plate provided with second optical compensation layer)

The second optical compensation layer obtained as described above was attached to a polarizing plate (available from Nitto Denko Corporation, trade name: SEG1224) through a pressure-sensitive adhesive (thickness of 20 µm), to thereby obtain a polarizing plate provided with a second optical compensation layer.

### (Waterproof treatment of polarizing plates)

A waterproof agent (available from Daikin Industries, Ltd., fluorine-based releasing agent, trade name: DAIFREE GA-6010) was sprayed to an entire side surface of each of the polarizing plate provided with a first optical compensation layer and the polarizing plate provided with a second optical compensation layer as described above for waterproof treatment. A water contact angle of each of waterproof parts was 116°.

### (Brightness measurement)

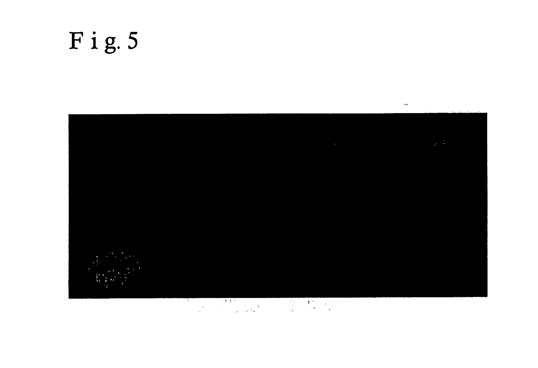

The brightness was measured by using the polarizing plate provided with a first optical compensation layer and the polarizing plate provided with a second optical compensation layer which are subjected to the waterproof treatment. Attachment of the polarizing plate provided with a first optical compensation layer and the polarizing plate provided with a second optical compensation layer to a liquid crystal cell was conducted by attaching the polarizing plate provided with a first optical compensation layer to a viewer side of the liquid crystal cell through an acrylic pressure-sensitive adhesive such that the first optical compensation layer was arranged on a liquid crystal cell side. Further, the polarizing plate provided with a second optical compensation layer was attached to a backlight side of the liquid crystal cell through an acrylic pressure-sensitive adhesive such that the second optical compensation layer was arranged on the liquid crystal cell side. Lamination was conducted such that a stretching (absorption) axis of the polarizer of the polarizing plate provided with a first optical compensation layer and a stretching (absorption) axis of the polarizer of the polarizing plate provided with a second optical compensation layer were substantially perpendicular to each other, to thereby obtain a liquid crystal panel. As a result of measurement, the brightness of a white part was 0.53 cd/m², and the brightness of a black display part was 0.47 cd/m². Fig. **5** shows a state of the liquid crystal panel during the brightness measurement.

### [Comparative Example 1]

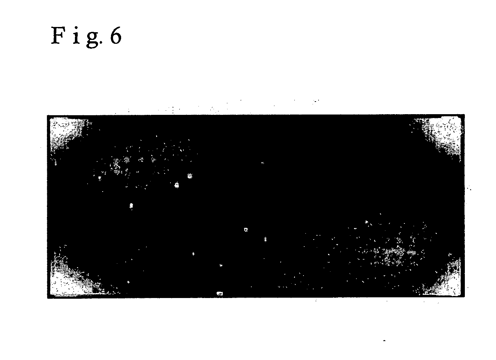

The same procedure as that of Example 1 was conducted except that the polarizing plate provided with a first optical compensation layer and the polarizing plate provided with a second optical compensation layer were not subjected to the waterproof treatment in Example 1. The polarizing plate provided with a first optical compensation layer and the polarizing plate provided with a second optical compensation layer not subjected to the waterproof treatment each had a water contact angle of 35° on each side surface. As a result of brightness measurement, the brightness of the white part was 0.80 cd/m², and the brightness of the black display part was 0.45 cd/m². Fig. **6** shows a state of the liquid crystal panel during the brightness measurement.

In comparison of Figs. **5** and **6,** no unevenness in brightness was observed in the liquid crystal panel of Example 1 employing the polarizing plate subjected to the waterproof treatment, but significant unevenness in brightness was observed in the liquid crystal panel of Comparative Example 1 employing the polarizing plate not subjected to the waterproof treatment.

### [Example 2]

A waterproof agent (available from Daikin Industries, Ltd., fluorine-based releasing agent, trade name: DAIFREE GA-6010) was sprayed to an entire side surface of polarizing plates "NIBCOM-NXP" and "SEG1224" both available from Nitto Denko Corporation for waterproof treatment. The water contact angle of each of waterproof parts was 116°.

Next, "NIBCOM-NXP" was attached to a backlight side of a liquid crystal cell taken out of a liquid crystal TV "BRAVIA 4 0-inch X-series" manufactured by Sony Corporation by using an acrylic pressures-sensitive adhesive (thickness of 20 µm), and "SEG1224" was attached to a viewer side thereof, to thereby produce a liquid crystal panel. Lamination was conducted such that a stretching (absorption) axis of a polarizer of "NIBCOM-NXP" and a stretching (absorption) axis of a polarizer of "SEG1224" were substantially perpendicular to each other.

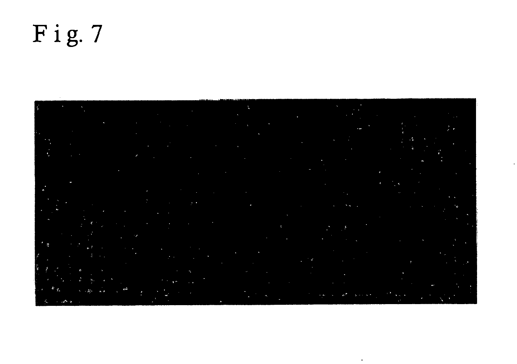

The brightness of the obtained liquid crystal panel was measured. Fig. **7** shows a state of the liquid crystal panel during the brightness measurement.

### [Comparative Example 2]

The same procedure as that of Example 2 was conducted except that "NIBCOM-NXP" and "SEG1224" were not subjected to the waterproof treatment in Example 2.

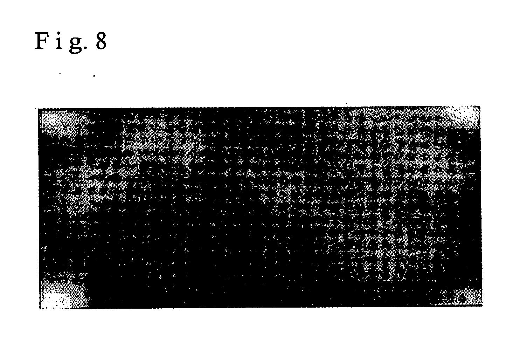

The brightness of the obtained liquid crystal panel was measured. Fig. **8** shows a state of the liquid crystal panel during the brightness measurement.

In comparison of Figs. **7** and **8,** no unevenness in brightness was observed in the liquid crystal panel of Example 2 employing the polarizing plate subjected to the waterproof treatment, but significant unevenness in brightness was observed in the liquid crystal panel of Comparative Example 2 employing the polarizing plate not subjected to the waterproof treatment.

### [Example 3]

A waterproof agent.(available from Daikin Industries, Ltd. , fluorine-based releasing agent, trade name: DAIFREE GA-6010) was sprayed to an entire side surface of polarizing plates "NIBCOM-NXP" and "VEG1722" both available from Nitto Denko Corporation for waterproof treatment. The water contact angle of each of waterproof parts was 116°.

Next, "NIBCOM-NXP" was attached to a backlight side of a liquid crystal cell taken out of a liquid crystal TV "BRAVIA 4 0-inchX-series" manufactured by Sony Corporation by using an acrylic pressures-sensitive adhesive (thickness of 20 µm), and "VEG1722" was attached to a viewer side thereof, to thereby produce a liquid crystal panel. Lamination was conducted such that a stretching (absorption) axis of a polarizer of "NIBCOM-NXP" and a stretching (absorption) axis of a polarizer of "VEG1722" were substantially perpendicular to each other.

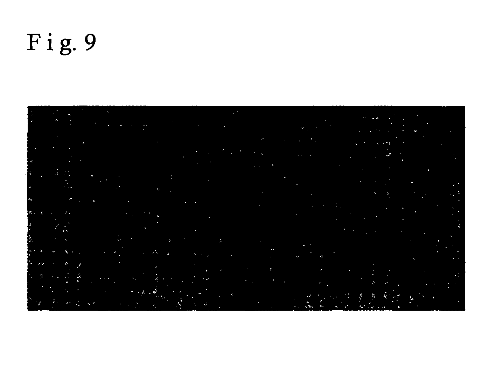

The brightness of the obtained liquid crystal panel was measured. Fig. **9** shows a state of the liquid crystal panel during the brightness measurement.

### [Comparative Example 3]

The same procedure as that of Example 3 was conducted except that "NIBCOM-NXP" and "VEG1722" were not subjected to the waterproof treatment in Example 3.

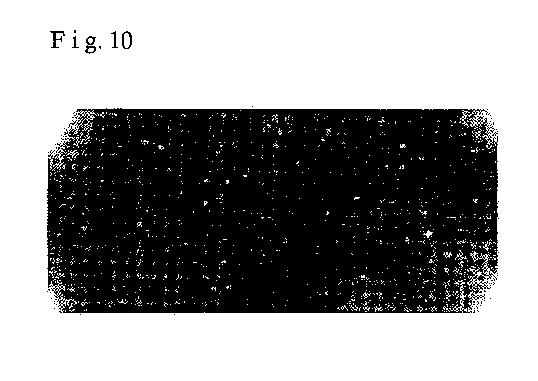

The brightness of the obtained liquid crystal panel was measured. Fig. **10** shows a state of the liquid crystal panel during the brightness measurement.

In comparison of Figs. **9** and **10,** no unevenness in brightness was observed in the liquid crystal panel of Example 3 employing the polarizing plate subjected to the waterproof treatment, but significant unevenness in brightness was observed in the liquid crystal panel of Comparative Example 3 employing the polarizing plate not subjected to the waterproof treatment.

### [Example 4]

A norbornene-based film "Arton" available from JSR Corporation was stretched to a 3 times length at 145°C. The retardation values of the film were measured by using "KOBRA-21ADH" manufactured by Oji Scientific Instruments. The film had Δnd of 115 nm and Rth of 135 nm.

Next, the norbornene-based film was attached to one .side of a polarizer available from Nitto Denko Corporation, and a triacetyl cellulose film (thickness of 40 µm) available from FUJIFILM Corporation was attached to an opposite side of the polarizer, to thereby produce a polarizing plate (A). A waterproof agent (available from Daikin Industries, Ltd., fluorine-based releasing agent, trade name: DAIFREE GA-6010) was sprayed to an entire side surface of the obtained polarizing plate (A) for waterproof treatment. The water contact angle of a waterproof part was 116°.

Meanwhile, a primer (polyester urethane) was applied to a triacetyl cellulose film (thickness of 40 µm) available from FUJIFILM Corporation, and a 15% solution of polyimide synthesized from 2,2'-bis(3,4-dicarboxyphenyl) hexafluoropropane and 2,2'-bis(trifluoromethyl)-4,4'-diaminobiphenyl by using cyclohexane as a solvent was applied thereto to a thickness of about 20 µm. Then, the whole was subjected to drying treatment at 100 °C for 10 minutes, to thereby obtain a polyimide thin film having a thickness of about 3.2 µm. The retardation values of the obtained composite retardation film were measured by using "KOBRA-21ADH" manufactured by Oji Scientific Instruments. The film had Δnd of 1 nm and Rth of 183 nm. Next, the composite retardation film instead of the triacetyl cellulose film was attached to one side of the polarizing plate "SEG1224" available from Nitto Denko Corporation through a polyvinyl alcohol-based adhesive such that the polyimide thin film was arranged on an outer side, to thereby obtain a polarizing plate (B). In the polarizing plate (B), a slow axis of the polyimide thin film and an absorption axis of the polarizer were perpendicular to each other. Awaterproofagent (availablefromDaikinIndustries, Ltd., fluorine-based releasing agent, trade name: DAIFREE GA-6010) was sprayed to an entire side surface of the polarizing plate (B) for waterproof treatment. The water contact angle of a waterproof part was 116°.

Next, the polarizing plate (A) was attached to a viewer side of a liquid crystal cell taken out of a liquid crystal TV "BRAVIA 40-inch X-series" manufactured by Sony Corporation by using an acrylic pressures-sensitive adhesive (thickness of 20 µm) such that the norbornene-based film was arranged on a cell side, and the polarizing plate (B) was attached to a backlight side thereof such that the polyimide thin film was arranged on the cell side, to thereby produce a liquid crystal panel. Lamination was conducted such that a stretching (absorption) axis of a polarizer of the polarizing plate (A) and a stretching (absorption) axis of a polarizer of the polarizing plate (B) were substantially perpendicular to each other.

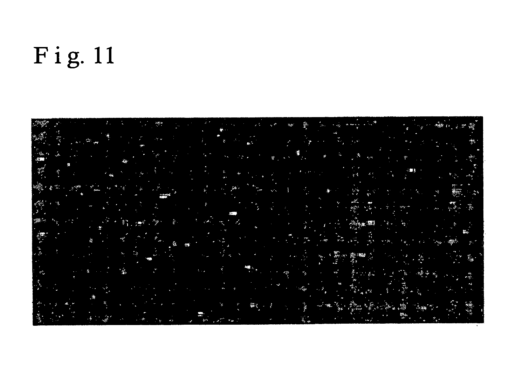

The brightness of the obtained liquid crystal panel was measured. Fig. **11** shows a state of the liquid crystal panel during the brightness measurement.

### [Comparative Example 4]

The same procedure as that of Example 4 was conducted except that the polarizing plate (A) and the polarizing plate (B) were not subjected to the waterproof treatment in Example 4.

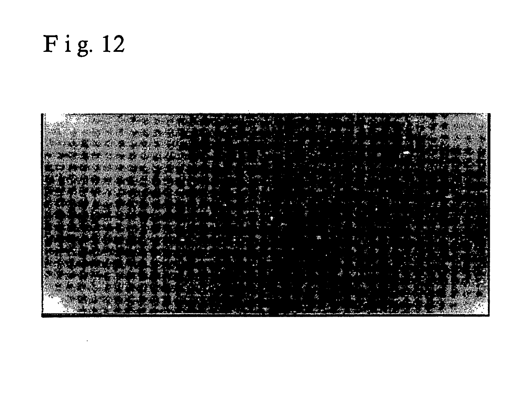

The brightness of the obtained liquid crystal panel was measured. Fig. **12** shows a state of the liquid crystal panel during the brightness measurement.

In comparison of Figs. **11** and **12,** no unevenness in brightness was observed in the liquid crystal panel of Example 4 employing the polarizing plate subjected to the waterproof treatment, but significant unevenness in brightness was observed in the liquid crystal panel of Comparative Example 4 employing the polarizing plate not subjected to the waterproof treatment.

The liquid crystal panel and liquid crystal display apparatus including the liquid crystal panel of the present invention may suitably be used for a liquid crystal television, a cellular phone, or the like.

Many other modifications will be apparent to and be readily practiced by those skilled in the art without departing from the scope and spirit of the invention. It should therefore be understood that the scope of the appended claims is not intended to be limited by the details of the description but should rather be broadly construed.

## Claims

1. A liquid crystal panel comprising: a liquid crystal cell; a first polarizing plate arranged on one side of the liquid crystal cell; and a second polarizing plate arranged on another side of the liquid crystal cell, wherein:
the first polarizing plate comprises a first polarizer;
the second polarizing plate comprises a second polarizer; and
the first polarizing plate comprises a first waterproof part on at least a part of a side surface, and/or the second polarizing plate comprises a second waterproof part on at least a part of a side surface.

2. A liquid crystal panel according to claim 1, wherein: the first polarizing plate has a substantially rectangular shape; and the first waterproof part includes four corners of the first polarizing plate.

3. A liquid crystal panel according to claim 1 or 2, wherein the first waterproof part is provided on an entire side surface of the first polarizing plate.

4. A liquid crystal panel according to any one of claims 1 to 3, wherein: the second polarizing plate has a substantially rectangular shape; and the second waterproof part includes four corners of the second polarizing plate.

5. A liquid crystal panel according to any one of claims 1 to 4, wherein the second waterproof part is provided on an entire side surface of the second polarizing plate.

6. A liquid crystal panel according to any one of claims 1 to 5, wherein the first waterproof part and the second waterproof part each have a water contact angle of 80° or more.

7. A liquid crystal panel according to any one of claims 1 to 6, wherein the liquid crystal cell is of VA mode or OCB mode.

8. A liquid crystal display apparatus comprising the liquid crystal panel according to any one of claims 1 to 7.
